# EUROPÄISCHE PATENTSCHRIFT

(11) **EP 3 365 190 B1**
(45) Veröffentlichungstag und Bekanntmachung des Hinweises auf die Patenterteilung: **30.01.2019**
(21) Anmeldenummer: 16782080.2
(22) Anmeldetag: 18.10.2016
(51) Int. Cl.: B60G 11/27, B60G 11/30, F16F 9/04, F16K 17/196, F16F 9/05, B60G 11/28, B60G 17/056, B60G 7/00

(54) **LENKERENDE**
END OF SUSPENSION ARM
EXTRÉMITÉ D'UN BRAS DE SUSPENSION

(30) Priorität: 19.10.2015 DE 102015117757
(43) Veröffentlichungstag der Anmeldung: 29.08.2018
(73) Patentinhaber: SAF-HOLLAND GmbH, 63856 Bessenbach (DE)
(72) Erfinder: FÄTH, Stefan, 63743 Aschaffenburg (DE); NABER, Thomas Josef, 48683 Ahaus (DE)
(74) Vertreter: Müller Schupfner & Partner Patent- und Rechtsanwaltspartnerschaft mbB
(86) Internationale Anmeldenummer: PCT/EP2016/074964
(87) Internationale Veröffentlichungsnummer: WO 2017/067920

(56) Entgegenhaltungen:
- EP-A2- 1 106 880
- WO-A1-79/00411
- WO-A1-2012/087917
- WO-A1-2012/145451
- WO-A1-2013/165238
- DE-A1-102013 210 142
- FR-A- 1 337 108
- US-A1- 2009 057 080

## Beschreibung

Die vorliegende Erfindung betrifft ein Lenkerende für einen Längslenker, insbesondere für Nutzfahrzeuge, einen Längslenker sowie eine Ventileinheit.

Längslenker werden bei Radaufhängungen von Kraftfahrzeugen verwendet und sind überwiegend in Längsrichtung des Fahrzeugs orientiert. Sie dienen der Abstützung von Bremskräften und Bremsreaktionsmomenten. Daneben sind sie durch ihre bewegliche Lagerung die maßgeblichen Teile eines Federungssystems. Zum Bereitstellen der Federwirkung werden im Nutzfahrzeugbereich vor allem Luftfedersysteme verwendet. Hierbei werden Federbälge, insbesondere aus Gummi, mit einem luftdicht abgeschlossenen Arbeitsvolumen verbunden und stellen so die Federwirkung bereit. Der Nachteil dabei ist, dass das Arbeitsvolumen einen großen Bauraum beansprucht, welcher im Bereich des Fahrwerks nicht zur Verfügung steht.

Die WO 2013/165238 A1 befasst sich mit einer Luftfeder, umfassend eine Montageplatte, ein flexibles röhrenförmiges Element, einen Kolben und zumindest ein Ventil, wobei das Ventil dazu ausgelegt ist, eine fluidleitende Verbindung einer Hauptkammer mit einer Reservekammer zu etablieren.

Die WO 2012/145451 A1 offenbart eine Luftfederanordnung für ein Fahrzeug mit einer variablen Federrate.

Die WO 2012/087917 A1 befasst sich mit Kolbenanordnungen, welche eine integrale Kolbenkammer aufweisen, wobei der Kolben an einem Strukturelement festlegbar ist und die Kolbenkammer zumindest zwei Seiten des Strukturelements umschließen.

Die EP 1 106 880 A2 offenbart ein Luftventil mit einem Gehäuseoberteil und einem Gehäuseunterteil, wobei das Gehäuseoberteil eine Abluftöffnung und das Gehäuseunterteil eine Zuluftöffnung aufweisen.

Die US 4 858 949 A befasst sich mit einem Leichtbaulängslenker mit einer Luftfederanordnung bestehend aus einem festgelegten Becher und einem beweglichen Kolben.

Die DE 14 30 075 A1 betrifft ein Massenfedersystem mit Hauptbehälter und Nachschaltbehälter, wobei in einem die beiden Behälter verbindenden Durchlass ein Dämpfer vorgesehen ist.

Es ist daher eine Aufgabe der vorliegenden Erfindung, ein Lenkerende für einen Längslenker, einen Längslenker sowie eine Ventileinheit anzugeben, welche ein kompaktes und kostengünstiges Luftfedersystem, insbesondere für Nutzfahrzeuganwendungen, ermöglichen.

Diese Aufgabe wird durch ein Lenkerende gemäß Anspruch 1 sowie durch einen Längslenker gemäß Anspruch 11 gelöst. Weitere Vorteile und Merkmale der Erfindung ergeben sich aus den Unteransprüchen sowie der Beschreibung und den beigefügten Figuren.

Erfindungsgemäß umfasst ein Lenkerende für einen Längslenker, insbesondere für Nutzfahrzeuge, einen Grundkörper, der ein Arbeitsvolumen für ein Luftfedersystem ausbildet, wobei der Grundkörper einen Zugangsbereich aufweist, welcher ausgelegt ist, einen Zugang in das Arbeitsvolumen bereitzustellen, dadurch gekennzeichnet, dass ein Großteil des Arbeitsvolumens im Wesentlichen unmittelbar unterhalb des Zugangsbereichs ausgebildet ist. Ein Luftfedersystem ist ein Federungssystem, das die Kompressibilität von Gasen, genauer der Luft, ausnutzt. Vorteile des Luftfedersystems sind die ruhige und komfortable Fahrweise und die variable Fahrzeughöhe. Das Luftfedersystem dient sowohl zur Abfederung zweier zueinander beweglicher Fahrzeugteile als auch zur Veränderung der Niveaulage des Fahrzeugs. Es kann also die Bodenfreiheit variiert werden. Die Federung erfolgt mittels Luft- bzw. Federbälgen, zweckmäßigerweise aus einem Kunststoffwerkstoff, insbesondere einem Gummiwerkstoff, in denen Druckluft beim Ein- und Ausfedern mit schwankendem Druck die Gegenkraft zu den fahrdynamischen Kräften am jeweiligen Rad oder der Achse bildet. Das Lenkerende ist dasjenige Bauteil, welches zur Anordnung/Befestigung des Luftfedersystems und insbesondere des (Luft-)Federbalgs dient, nämlich insbesondere dadurch, dass es den Zugangsbereich aufweist. Hierzu weist das Lenkerende zweckmäßigerweise einen oberen Abschnitt auf, welcher den vorgenannten Zugangsbereich aufweist bzw. umfasst. In einer Ausführungsform ist der obere Abschnitt eine im Wesentlichen glatte/plane/ebene Oberfläche, welche den Zugangsbereich aufweist. Der Zugangsbereich ist nach einer Ausführungsform als Loch, Öffnung oder allgemein als Durchbruch ausgebildet, der einen Zugang in das Innere des Lenkerendes bereitstellt, wobei der Zugangs so gestaltet ist, dass Luft in das Arbeitsvolumen hinein- bzw. hinausströmen kann. In einer Ausführungsform umfasst der obere Abschnitt einen zylinderförmigen Abschnitt, der insbesondere einen Abrollkolben für einen Luftbalg ausbilden kann. Der zylinderförmige Abschnitt dient zweckmäßigerweise der Anordnung/Befestigung des Federbalgs und weist den Zugangsbereich auf. Anders ausgedrückt ist der Zugangsbereich innerhalb des zylindrischen Abschnitts, in einer Ausführungsform beispielsweise im Wesentlichen mittig, angeordnet. Der Begriff "Lenkerende" bezieht sich darauf, dass das Lenkerende, oder auch "tail end", der Teil des Längslenkers ist, welcher in Fahrtrichtung gesehen zuhinterst angeordnet ist. Ein vorderes oder gegenüberliegendes Ende des Längslenkers weist zweckmäßigerweise einen Drehpunkt auf, über welchen die bewegliche Anordnung des Längslenkers an einem Fahrzeugrahmen erfolgt. Zudem weist der Längslenker auch noch einen Anordnungsabschnitt für ein Achsrohr auf. Vorliegend wird der Ausdruck Längslenker auch für einen Längslenker verwendet, der ggf. noch kein Lenkerende aufweist und daher streng genommen vielleicht kein "vollständiger" Längslenker ist. Aus dem Stand der Technik ist es teilweise bekannt, die Volumina angrenzender Fahrzeugteile in irgendeiner Art und Weise als Ausgleichsvolumina oder dergleichen für das Luftfedersystem zu verwenden. Zweckmäßigerweise umfasst vorliegend das Lenkerende den Grundkörper, welcher das Arbeitsvolumen unmittelbar selbst ausbildet, wobei hier das "Arbeitsvolumen" auch etwaige Zusatzvolumina etc. miteinschließt. Vorteilhafterweise wird damit eine kompakte Baueinheit erreicht, welche jegliche Verbindungselement wie Schläuche, Kupplungen, Dichtungen etc. einspart, wodurch ein einfaches und kostengünstiges System/Produkt realisierbar ist. In einer Ausführungsform handelt es sich bei dem Arbeitsvolumen um ein geschlossenes Volumen, welches im Wesentlichen unmittelbar unterhalb des Zugangsbereichs ausgebildet ist. Dies bedeutet, dass, wie eingangs erwähnt, ein Großteil des Arbeitsvolumens unterhalb des Zugangsbereichs oder unterhalb des unteren Abschnitts ausgebildet ist. Dabei bedeutet der Ausdruck "Großteil", das direkt unmittelbar unterhalb des Zugangsbereichs mehr als 50 %, insbesondere mehr als 60, 70 oder 80 % des Arbeitsvolumens angeordnet sind. In einer Ausführungsform umfasst das Arbeitsvolumen beispielsweise ca. 10 bis 100 l, ggf. 20 bis 80 l oder bevorzugt auch zwischen 30 und 60 l. Ein Verhältnis zwischen einem Volumen eines Luftfederbalgs zum Arbeitsvolumen liegt zweckmäßigerweise in einem Bereich von etwa 0,91 bis 0,34, bevorzugt in einem Bereich von etwa 0,67 bis 0,5. In einer Ausführungsform wird das Arbeitsvolumen nach oben durch den oberen Abschnitt begrenzt, was beutet, dass das Arbeitsvolumen keinen Bauraum oberhalb des bevorzugt ebenen oberen Abschnitts aufweist.

Erfindungsgemäß ist der Grundkörper ein geschlossener Hohlkörper, wobei der Hohlkörper zweckmäßigerweise den Zugangsbereich aufweist. Bei dem geschlossenen Hohlkörper kann es sich in einem nicht erfindungsgemäßen Beispiel um eine Schweißkonstruktion aus Metall, insbesondere Stahl oder Aluminium, handeln. Erfindungsgemäß handelt es sich bei dem Hohlkörper um ein mittels Innenhochdruck umgeformtes Bauteil. Alternativ kann auch die zumindest teilweise Verwendung von Faserverbundwerkstoffen, wie glasfaser- oder kohlefaserverstärkten Werkstoffen, vorgesehen sein, was die mögliche Formenvielfalt zusätzlich erhöht. Wie bereits erwähnt, ist der Zugangsbereich eine Öffnung, welche die unterschiedlichsten Geometrien und Abmessungen aufweisen kann und sich in der Regel nach Art und Größe des verwendeten Luftfedersystems bzw. des verwendeten Federbalgs richtet. Insbesondere kann der Zugangsbereich beispielsweise auch eine Vielzahl von Öffnungen, beispielsweise zwei, drei, vier, fünf, sechs und mehr aufweisen. Das "geschlossen" ist dahingehend zu verstehen, dass der Grundkörper gerade keine weiteren Anschlüsse für etwaige Zusatzvolumina oder Ausgleichsvolumina aufweist, sondern diese Funktionen aufgrund seiner Dimensionierung und Gestaltung selbst wahrnehmen kann.

In einer Ausführungsform weist der Grundkörper gegenüber dem Zugangsbereich bzw. gegenüber dem oberen Abschnitt einen unteren Abschnitt auf, wobei der untere Abschnitt mehr als 5 cm, bevorzugt mehr als 8 cm und insbesondere bevorzugt mehr als 10 cm vom Zugangsbereich bzw. vom oberen Abschnitt beabstandet ist. In einer Ausführungsform ist der untere Abschnitt durch eine im Wesentlichen ebene untere Fläche gebildet, welche sich im Wesentlichen parallel zu einer Fahrbahnebene erstreckt. Selbstverständlich kann die untere Fläche auch nach vorne, nach hinten oder zu den Seiten hin geneigt sein. Entscheidend ist, dass die untere Fläche durch ihren Abstand vom Zugangsbereich bzw. vom oberen Abschnitt ein ausreichend großes Arbeitsvolumen bereitstellt. In einer Ausführungsform sind der obere Abschnitt und der untere Abschnitt etwa parallel zueinander ausgerichtet und weisen einen Abstand von etwa 10 bis 50 cm, bevorzugt von etwa 13 bis 30 cm auf. Nach hinten, also entgegen der Fahrtrichtung, ist der Grundkörper durch einen hinteren Abschnitt begrenzt, welcher in einer Ausführungsform im Wesentlichen senkrecht zum oberen und unteren Abschnitt orientiert ist. Nach vorne ist der Grundkörper durch einen vorderen Abschnitt begrenzt. In einer Ausführungsform ist der vordere Abschnitt zumindest bereichsweise parallel zum hinteren Abschnitt ausgebildet bzw. orientiert. Ein unterer Bereich des vorderen Abschnitts kann nach einer Ausführungsform schräg bzw. geneigt sein. In einer Ausführungsform hat der Grundkörper eine etwa quaderförmige Gestaltung. Eine Länge des Grundkörpers des Lenkerendes beträgt in einer Ausführungsform etwa 30 bis 60 cm, bevorzugt etwa 40 bis 50 cm. Zweckmäßigerweise ist ein Überstand des Lenkerendes, welcher sich von einer Achsrohrmitte zum hinteren Abschnitt bemisst (im Wesentlichen parallel zu einer Fahrbahnebne bzw. entlang einer Längsrichtung des Längslenkers) kleiner als 90 cm. In einer Ausführungsform ist der Überstand z. B. zwischen 30 und 90 cm, bevorzugt zwischen 40 und 60 cm lang. Eine Breite des Grundkörpers beträgt in einer Ausführungsform etwa 20 bis 50 cm, bevorzugt etwa 25 bis 40 cm. Die Höhe bzw. der Abstand zwischen dem oberen und dem unteren Abschnitt wurde bereits erwähnt. In einer Ausführungsform beträgt eine Wandstärke etwa 3 bis 7 mm, bevorzugt etwa 4 bis 5 mm.

Obwohl es sich um einen Hohlkörper handelt, kann der Grundkörper in einer Ausführungsform auch im Inneren eine Versteifung in Form von Rippen, Streben oder allgemein von Verstärkungselementen aufweisen, welche ausgelegt sind, die Festigkeit bzw. Steifigkeit des Grundkörpers zu erhöhen. So wirken auf diesen sowohl im Inneren die Gaskräfte als auch von außen die Kräfte, die durch den Federbalg eingebracht werden, so dass eine stabile Konstruktion unabdingbar ist.

In einer Ausführungsform umfasst der untere Abschnitt eine Auflagefläche, die zum Anordnen und Befestigen des Lenkerendes an einen Längslenker ausgelegt ist. In einer Ausführungsform ist die Auflagefläche in Richtung des Zugangsbereichs versetzt angeordnet, so dass der untere Abschnitt keine gerade Fläche aufweist. In einer Ausführungsform ist die Auflagefläche etwa 5 bis 20 cm, bevorzugt etwa 8 bis 15 cm, um einen Abstand in Richtung des Zugangsbereichs bzw. in Richtung des oberen Abschnitts versetzt. Eine Breite der Auflagefläche beträgt in einer Ausführungsform etwa 5 bis 20 cm, bevorzugt etwa 8 bis 15 cm. Der untere Abschnitt kann aber auch selbst die Funktion der Auflagefläche erfüllen. Grundsätzlich ist die Auflagefläche derart ausgelegt, dass sie zur Anordnung bzw. zur Montage an einen Längslenker ausgebildet bzw. ausgelegt ist. Die Verbindung mit dem Längslenker kann über eine form- und/oder kraftschlüssige oder auch über eine stoffschlüssige Verbindung wie beispielsweise Schweißen oder Kleben erfolgen. Für die form- und/oder kraftschlüssige Verbindung können entsprechende Nieten, Bolzen und dergleichen verwendet werden.

Wie bereits erwähnt, weist der Grundkörper auch einen vorderen Abschnitt auf, welcher ebenfalls die Funktion einer Auflage- oder Anordnungsfläche bereitstellen kann, mit anderen Worten also zum Anordnen des Lenkerendes an einen Längslenker ausgelegt ist. In einer Ausführungsform handelt es sich dabei um eine im Wesentlichen horizontale Außenwand, welche derart ausgelegt ist, dass sie an einen Längslenker angeordnet und befestigt, beispielsweise verschweißt werden kann. Die Außenwand kann dabei glatt oder auch strukturiert sein, um ggf. auch einen Formschluss mit dem Längslenker zu ermöglichen. In einer Ausführungsform ist das Lenkerende über den unteren Abschnitt bzw. die Auflagefläche und den vorderen Abschnitt an einem Längslenkers angeordnet und befestigt. In einer anderen Ausführungsform ist das Lenkerende nur mittels des vorderen Abschnitts an dem Längslenker befestigt, beispielsweise über eine form- und/oder eine kraft- und/oder eine stoffschlüssige Verbindung.

In einer Ausführungsform umfasst das Lenkerende eine Ventileinheit, welche eine Klemmplatte umfasst, wobei die Klemmplatte eine Vielzahl von Ventilöffnungen, insbesondere vier Ventilöffnungen, aufweist. In einer Ausführungsform ist im Zugangsbereich bzw. im Übergangsbereich zwischen dem Volumen des Federbalgs und dem Arbeitsvolumen die Ventileinheit vorgesehen, welche entsprechend der Druckverhältnisse in den beiden Volumina öffnet und schließt. Gemäß einer Ausführungsform ist die Klemmplatte im oder am oberen Abschnitt des Grundkörpers bzw. im oder am zylinderförmigen Abschnitt angeordnet. In einer Ausführungsform mit vier Ventilöffnungen weisen jeweils zwei Ventilöffnungen einen (maximalen) Querschnitt von etwa 400 bis 1500 mm², bevorzugt von etwa 500 bis 1200 mm², besonders bevorzugt von etwa 600 bis 1000 mm² auf. Grundsätzlich ist der Querschnitt abhängig von dem anliegenden Druckunterschied und der (auftretenden) Frequenz. Üblich ist in diesem Zusammenhang die Einheit mm²/bar, wobei typische Werte in einem Bereich von etwa 450 bis 650 mm²/bar liegen, bevorzugt bei etwa 480 bis 620 mm²/bar (10 Hz ca. 1,2 bar, 5 Hz ca. 0,3 bar, 15 Hz ca. 0,4 bar). Bevorzugte Querschnittswerte liegen demnach in einem Bereich von etwa 0 bis 800 mm² oder, wenn ein Bypass vorhanden ist, in einem Bereich von etwa 20 bis 800 mm². Durch die Reibung in der Ventileinheit kann eine Dämpfung durch das Luftfedersystem erzeugt werden. Dies kann die Einsparung eines (Stoß-) Dämpfers ermöglichen. In einer Ausführungsform ist die Klemmplatte rund, insbesondere kreisrund, und weist einen Durchmesser von etwa 70 bis 120 mm auf, bevorzugt von etwa 80 bis 110 mm, und ganz besonders bevorzugt von etwa 90 bis 100 mm, beispielsweise 94 mm. In einer Ausführungsform weist die Klammplatte eine Wandstärke von etwa 2 bis 7 mm, bevorzugt von etwa 3 bis 6 mm und ganz besonders bevorzugt von etwa 4 bis 5 mm, beispielsweise 4,6 mm, auf. Die Klemmplatte ist in einer Ausführungsform aus Metall oder aus einem Kunststoff gefertigt. In einer Ausführungsform sind ein oder mehrere Führungsstifte in der Klemmplatte derart angeordnet, dass die Bewegung der nachfolgend beschriebenen Ventilklappen durch die Führungsstifte geführt wird. Insbesondere verhindern die Führungsstifte eine Rotation der Ventilklappen zueinander. Die Führungsstifte können beispielsweise als Zylinderstifte ausgebildet sein, die eine Länge von etwa 15 mm und einen Durchmesser von etwa 2 mm aufweisen.

In einer Ausführungsform umfasst die Ventileinheit eine obere Ventilklappe und eine untere Ventilklappe, wobei die Ventilklappen derart angeordnet sind, dass jeweils unterschiedliche Ventilöffnungen geöffnet und geschlossen werden können. Die obere Ventilklappe ist zweckmäßigerweise oberhalb der Klemmplatte angeordnet, die untere Ventilklappe zweckmäßigerweise unterhalb der Klemmplatte. Zweckmäßigerweise weisen die Ventilklappen entsprechende Abschnitte/Bereiche auf, die ausgelegt sind, die Ventilöffnungen der Ventileinheit bzw. der Klemmplatte abzudecken. Die gegenüberliegenden Ventilklappen sind gemäß einer Ausführungsform so versetzt angeordnet, beispielsweise um 90° versetzt, dass sie jeweils unterschiedliche Ventilöffnungen abdecken und freigeben können.

Zweckmäßigerweise umfasst die Ventileinheit ein Führungselement, welche derart ausgelegt ist, dass sich die Ventilklappen entlang des Führungselements bewegen können. Gemäß einer Ausführungsform handelt es sich bei dem Führungselement um einen Stift, Bolzen, Steg oder auch um eine Schraube, die zumindest bereichsweise kein Gewinde aufweist. Ein Querschnitt des Führungselements ist also bevorzugt rund, insbesondere kreisrund. Ein ovaler oder eckiger Querschnitt kann ebenfalls zweckmäßig sein, da dadurch evtl. auf die zuvor genannten Führungsstifte verzichtet werden kann. Ein Durchmesser eines runden Querschnitts liegt gemäß einer Ausführungsform in einem Bereich von etwa 4 bis 8 mm, bevorzugt in einem Bereich von etwa 5 bis 7 mm, beispielsweise 6 mm. Das Führungselement ist in einer entsprechenden Öffnung/Aussparung der Klemmplatte, zweckmäßigerweise mittig, angeordnet.

In einer Grundstellung liegen die Ventilklappen an der Klemmplatte derart an, dass die Ventilöffnungen verschlossen sind.

Hierzu umfasst die Ventileinheit zweckmäßigerweise ein Vorspann- oder Federelement, welches die Ventilklappen in Richtung der Klemmplatte vorspannt oder mit einer (Feder-) Kraft beaufschlägt. Zweckmäßigerweise ist das Federelement derart zwischen einer der Ventilklappen und einem Abstützelement angeordnet, dass bei einer Bewegung der unteren Ventilklappe nach unten und bei einer Bewegung der oberen Ventilklappe nach oben eine Komprimierung des Federelements stattfindet. Nach einer Ausführungsform ist z. B. das Federelement zwischen der unteren Ventilklappe und dem Abstützelement angeordnet, wobei das weitere Element eine Scheibe ist, die sich an einer als Führungselement ausgebildeten Schraube (beispielsweise über eine dort angeordnete Mutter) abstützt. Vorteilhafterweise ist die Anordnung so ausgebildet, dass die Ventilklappen bei Verwendung nur eines Federelements gegeneinander verspannt sind. Wird der Federbalg belastet, wird der Druck im Volumen des Federbalgs durch dessen Komprimierung erhöht. Der Überdruck bzw. die Druckdifferenz zwischen dem Druck im Arbeitsvolumen und dem Druck im Federbalg bewirkt gegen die Kraft des Federelements ein Bewegen der unteren Ventilklappe gegen die Federkraft nach unten. Das Expandieren des Federbalgs (beim Ausfedern) führt zu einem Differenzdruck zwischen dem Volumen des Federbalgs und dem Arbeitsvolumen derart, dass im Arbeitsvolumen ein höherer Druck herrscht als im Volumen des Federbalgs. Diese Druckdifferenz bewirkt gegen die Kraft des Federelements ein Verlagern der oberen Ventilklappe nach oben. Es gibt also eine obere Stellung, in der die obere Ventilklappe in einer oberen Position ist und eine untere Stellung, in der die untere Ventilklappe in einer unteren Position ist. Die Bewegung der Ventilklappen erfolgt dabei nicht allein nur durch das Anliegen eines Druckverhältnisses sondern auch direkt durch des Gasdruck, der auf die Flächen der Ventilklappen wirkt, die durch die Klemmplatte bzw. die jeweils andere Ventilklappe nicht verdeckt sind. Grundsätzlich kann es sich bei dem Vorspann- oder Federelement um ein Elastomerelement oder um eine Schraubenfeder, insbesondere um eine zylindrische Schrauben-Druckfeder handeln, beispielsweise gemäß DIN 2098 mit den Dimensionen 1x8x13. Zweckmäßigerweise ist innerhalb des Federelements das Führungselement positioniert.

In einer Ausführungsform sind die Ventilklappen zweiblättrig ausgebildet, so dass sie jeweils zwei Öffnungen der Ventileinheit schließen können. Die Form der Ventilklappen ist zweckmäßigerweise auf die Form der Ventilöffnungen angepasst. Die Ventilöffnungen können rund, eckig, schlitzartig, dreieckig, etc. ausgebildet sein, wobei hinsichtlich deren Formgebung keine Grenzen gesetzt sind. Die bereits genannten Querschnitte der Ventilöffnungen können gleich oder auch unterschiedlich groß ausgeführt sein, wodurch die Dämpfungscharakteristik beeinflusst werden kann. Ein Durchmesser der Ventilklappen beträgt in einer Ausführungsform etwa 3 bis 10 cm, bevorzugt etwa 4 bis 8 cm. Zweckmäßigerweise weisen die Ventilklappen entsprechende Führungsöffnungen beispielsweise in Form von Löchern oder Bohrungen zur Aufnahme/Anordnung der zuvor genannte Führungsstifte auf.

Gemäß einer alternativen Ausführungsform kann auch auf die Klemmplatte verzichtet werden. In diesem Fall weist der Zugangsbereich die Ventilöffnungen auf und stellt die Eigenschaften der Klemmplatte bereit.
Die Erfindung umfasst auch einen Längslenker, insbesondere für Nutzfahrzeuge, der ein erfindungsgemäßes Lenkerende umfasst. Ein hinterer Teil des Längslenkers ist also mit Vorteil als das erfindungsgemäße Lenkerende ausgebildet.

In einer Ausführungsform können der Längslenker und das Lenkerende einteilig ausgebildet sein. In einer Ausführungsform ist damit eine einteilige Struktur im Wortsinn gemeint, also gerade keine form- und/oder kraftschlüssige bzw. auch stoffschlüssige Verbindung zwischen einem Längslenker (-vorderteil) und einem Lenkerende sondern die Ausbildung des Längslenkers als ein Teil, wobei der hintere Teil als das erfindungsgemäße Lenkerende ausgebildet ist. Das Merkmal betreffend die "Einteiligkeit" ist nach einer Ausführungsform auch dahingehend auszulegen, dass zumindest ein Bereich, umfassend das Lenkerende und einen Mittelteil des Längslenkers, einteilig oder aus einem Stück ausgebildet ist.

Weiter umfasst die Erfindung auch eine erfindungsgemäße Ventileinheit. Es versteht sich, dass die in Zusammenhang mit dem erfindungsgemäßen Lenkerende erwähnten Vorteile und Merkmale auch für den erfindungsgemäßen Längslenker und die erfindungsgemäße Ventileinheit gelten, wie auch umgekehrt und untereinander.

Weitere Vorteile und Merkmale ergeben sich mit Bezug auf die beigefügten Figuren aus der nachfolgenden Beschreibung bevorzugter Ausführungsformen des erfindungsgemäßen Lenkerendes, des erfindungsgemäßen Längslenkers sowie der erfindungsgemäßen Ventileinheit. Einzelne Merkmale der einzelnen Ausführungsformen können dabei im Rahmen der Erfindung miteinander kombiniert werden.

Es zeigen:
- Fig. 1:: eine Ausführungsform eines Lenkerendes, angeordnet an einem Längslenker;
- Fig. 2:: eine Ausführungsform eines Lenkerendes, angeordnet an einem Längslenker;
- Fig. 3:: eine Ausführungsform eines Lenkerendes, angeordnet an einem Längslenker;
- Fig. 4:: eine Ausführungsform einer Ventileinheit;
- Fig. 5a:: eine Ausführungsform einer Ventileinheit in einer Draufsicht;
- Fig. 5b:: den in Fig. 5a gekennzeichneten Schnitt A-A;
- Fig. 6a:: eine Ausführungsform einer Ventileinheit in einer Seitenansicht;
- Fig. 6b:: die aus Fig. 6a bekannte Ausführungsform der Ventileinheit, bei welcher die Ventilklappen in einer anderen Position sind.

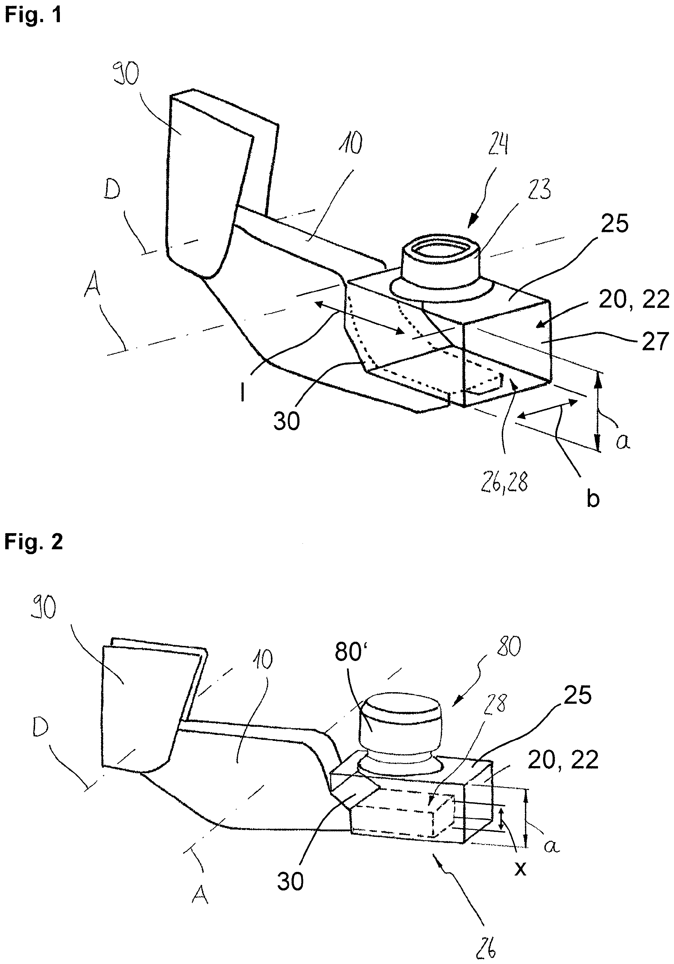

**Fig. 1** zeigt ein Lenkerende 20 mit einem Grundkörper 22, der an einem Längslenker 10 über einen unteren Abschnitt 26 angeordnet ist. Der untere Abschnitt 26 ist hierzu teilweise als Auflagefläche 28 ausgebildet und im Wesentlichen gegenüberliegend einem oberen Abschnitt 25 angeordnet. Der obere Abschnitt 25 umfasst einen zylinderförmiger Abschnitt 23, welcher einen Zugangsbereich 24 aufweist. Zwischen dem oberen Abschnitt 25 und dem unteren Abschnitt 26 erstreckt sich ein Abstand a. Der Längslenker 10 ist über einen Drehpunkt D in einem Fahrzeugrahmen/Chassis 90 angeordnet. Nicht eingezeichnet ist ein Achsrohr, welches sich entlang der Achsrichtung A erstreckt und im Längslenker 10 entsprechend angeordnet wäre. Zwischen einem vorderen Abschnitt 30, über welchen ebenfalls eine zumindest teilweise Anordnung/Befestigung an dem Längslenker 10 erfolgen kann, und einem hinteren Abschnitt 27 bemisst sich eine Länge l. Der Grundkörper 22 weist eine Breite b auf und ist im Wesentlichen quaderförmig geformt, wobei ein durch den Grundkörper 22 ausgebildetes Arbeitsvolumen im Wesentlichen unterhalb des Zugangsbereichs 24 angeordnet ist.

**Fig. 2** zeigt eine ähnliche Konfiguration wie Fig. 1, allerdings ist hier eine Auflagefläche 28, welche ebenfalls zur Anordnung an einem Längslenker 10 dient, um einen Versatz x gegenüber einem unteren Abschnitt 26 versetzt angeordnet. Zwischen einem oberen Abschnitt 25 und einem unteren Abschnitt 26 erstreckt sich ein Abstand a. Ein Luftfedersystem 80, welches einen Federbalg 80' umfasst, ist auf dem oberen Abschnitt 25 bzw. einem Zugangsbereich (durch die Anordnung des Federbalgs 80' verdeckt) angeordnet. Ein Grundkörper 22 umfasst einen vorderen Abschnitt 30, über welchen zumindest bereichsweise ebenfalls eine Anordnung an dem Längslenker 10 erfolgt.

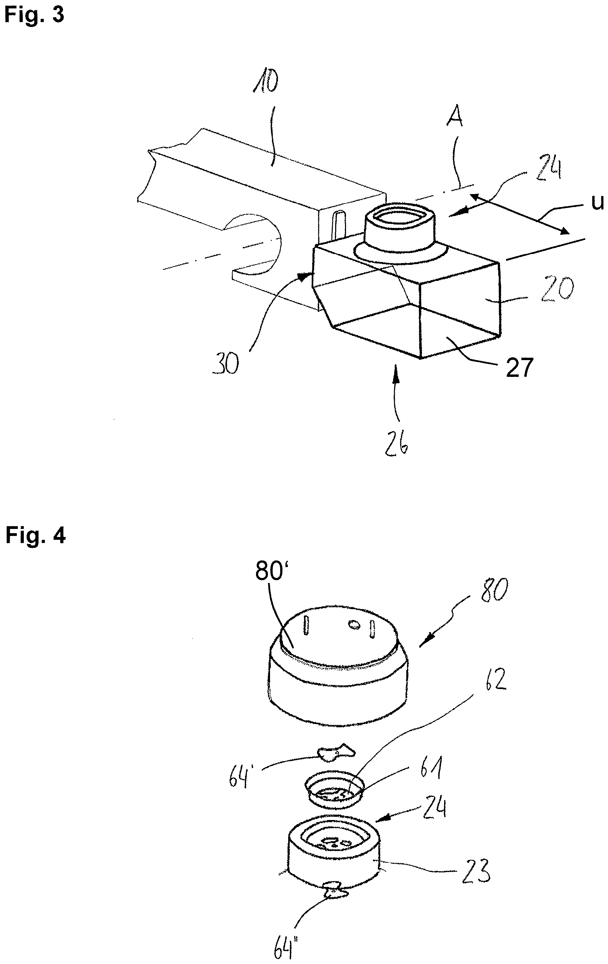

**Fig. 3** zeigt eine weitere Ausführungsform eines Lenkerendes 20, umfassend einen Zugangsbereich 24 und einen im Wesentlichen gegenüberliegenden unteren Abschnitt 26. In der hier gezeigten Ausführungsform ist das Lenkerende 20 lediglich über einen vorderen Abschnitt 30 an einem Längslenker 10 angeordnet und befestigt, beispielsweise verschweißt. Dargestellt ist in dieser Figur auch ein Überstand u, welcher sich zwischen einer Mitte eines Achsrohrs, vorliegend angedeutet durch die Achsrichtung A, und einem hinteren Abschnitt 27 bemisst.

**Fig. 4** zeigt eine Ausführungsform einer Ventileinheit 60 mit einer oberen Ventilklappe 64' und einer unteren Ventilklappe 64" sowie einer Klemmplatte 61, welche in einem zylinderförmigen Abschnitt 23 angeordnet ist. Die Klemmplatte 61 umfasst mehrere Ventilöffnungen 62. Die Ventileinheit 61 bildet einen Zugangsbereich 24 aus bzw. ist in diesem angeordnet. Ein Federbalg 80' eines Luftfedersystems 80 wird auf dem zylinderförmigen Abschnitt 23 angeordnet.

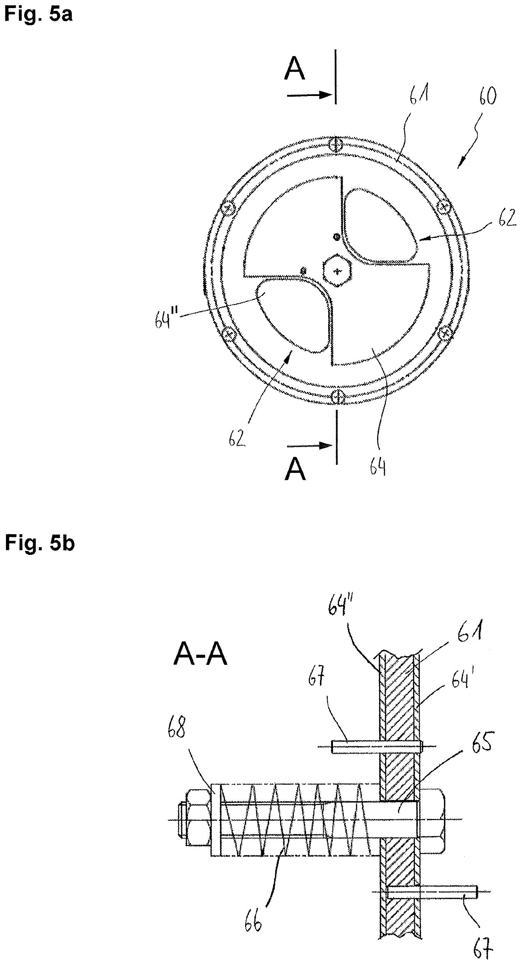

**Fig. 5a** zeigt eine Ventileinheit 60 in einer Draufsicht. Zu sehen ist eine Klemmplatte 61, in der eine obere Ventilklappe 64' eingelegt ist. Durch die Ventilöffnungen 62 hindurch ist eine untere Ventilklappe 64" erkennbar. Die Klemmplatte 61 weist an ihrem Umfang mehrere Öffnungen zur Befestigung, beispielsweise an einem Grundkörper eines Lenkerendes, auf. Ein Schnitt A-A ist in Fig. 5b erklärt.

**Fig. 5b** zeigt den Schnitt A-A auf Fig. 5a. Deutlich zu erkennen ist die Anordnung von Führungsstiften 67 in der Klemmplatte 61. Diese verhindern ein Rotieren der Ventilklappen 64', 64". Ein Federelement 66 in Form einer Schraubenfeder ist um ein Führungselement 65 angeordnet. Das Führungselement 65 ist durch eine Schraube gebildet, die bereichsweise kein Gewinde aufweist, wodurch die untere Ventilklappe 64" auf dem Führungselement 65 gleiten kann. Das Federelement 66 stützt sich zwischen einem Abstützelement 68 bzw. einer Scheibe 68 und der unteren Ventilklappe 64" ab. Dadurch sind beide Ventilklappen 64', 64" gegeneinander vorgespannt.

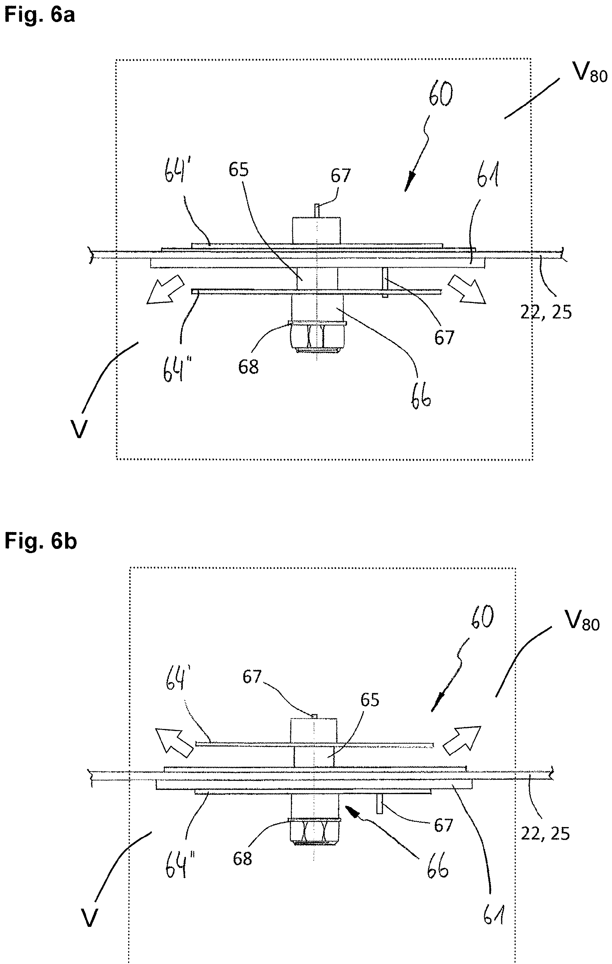

**Fig. 6a** zeigt eine Ventileinheit 60 in einer Seitenansicht. Eine Klemmplatte 61 ist in einem Grundkörper 22 oder in einem oberen Abschnitt 25 angeordnet. Die beiden Ventilklappen 64' und 64" sind an einem Führungselement 65 angeordnet und über ein Vorspann- oder Federelement 66 vorgespannt. Zu erkennen sind auch Führungsstifte 67. In Fig. 6a ist ein Einfedern dargestellt, bei welchem ein Volumen des (Luft-)Federbalgs V₈₀ verkleinert wird, so dass gegen die Kraft des Federelements 66 die untere Ventilklappe 64" geöffnet wird und Luft von einem Volumen V₈₀ zu einem Arbeitsvolumen V strömt. Dies ist durch die Pfeile angedeutet.

**Fig. 6b** zeigt die aus Fig. 6a bekannte Ausführungsform, allerdings zu einem Zeitpunkt, wenn sich das Volumen des Federbalgs V₈₀ wieder vergrößert. Durch das Expandieren des Federbalgs kommt es zu einem Öffnen der oberen Ventilklappe 64' und Luft strömt von dem Arbeitsvolumen V in das Volumen V₈₀ zurück (siehe auch hier die Pfeile). Auch dies erfolgt gegen die Vorspannung des Federelements 66.

### Bezugszeichenliste

- 10: Längslenker
- 20: Lenkerende
- 22: Grundkörper
- 23: zylinderförmiger Abschnitt
- 24: Zugangsbereich
- 25: oberer Abschnitt
- 26: unterer Abschnitt
- 27: hinterer Abschnitt
- 28: Auflagefläche
- 30: vorderer Abschnitt
- 60: Ventileinheit
- 61: Klemmplatte
- 62: Ventilöffnung(en)
- 64': obere Ventilklappe
- 64": untere Ventilklappe
- 65: Führungselement
- 66: Federelement, Schrauben-Druckfeder
- 67: Führungsstift
- 68: Abstützelement. Scheibe
- 80: Luftfedersystem
- 80': (Luft-)Federbalg
- 90: Fahrzeugrahmen/Chassis
- V: Arbeitsvolumen
- V₈₀: Federbalgvolumen
- A: Achsrichtung
- D: Drehachse
- a: Abstand/Höhe
- b: Breite
- l: Länge
- x: Versatz
- u: Überstand

## Patentansprüche

1. Lenkerende (20) für einen Längslenker (10), insbesondere für Nutzfahrzeuge,
umfassend einen Grundkörper (22), der ein Arbeitsvolumen (V) für ein Luftfedersystem (80) ausbildet,
wobei der Grundkörper (22) einen Zugangsbereich (24) aufweist, welcher ausgelegt ist, einen Zugang in das Arbeitsvolumen (V) bereitzustellen, wobei ein Großteil des Arbeitsvolumens (V) im Wesentlichen unterhalb des Zugangsbereichs (24) ausgebildet ist,
wobei der Grundkörper ein geschlossener Holkörper ist, **dadurch gekennzeichnet, dass**
es sich bei dem Hohlkörper um ein mittels Innenhochdruck umgeformtes Bauteil handelt.

2. Lenkerende (20) nach Anspruch 1, wobei der Grundkörper (22) gegenüber dem Zugangsbereich (24) einen unteren Abschnitt aufweist (26), und wobei der untere Abschnitt (26) mehr als 5 cm, bevorzugt mehr als 8 cm, insbesondere bevorzugt mehr als 10 cm, vom Zugangsbereich (24) beabstandet ist.

3. Lenkerende (20) nach Anspruch 2, wobei der untere Abschnitt (26) eine Auflagefläche (28) umfasst, die zum Anordnen des Lenkerendes (20) an einen Längslenker (10) ausgelegt ist.

4. Lenkerende (20) nach einem der vorhergehenden Ansprüche wobei der Grundkörper (22) einen vorderen Abschnitt aufweist, welcher die Funktion einer Auflage- oder Anordnungsfläche (28) bereitstellt, welche vorzugsweise eine im Wesentlichen horizontale Außenwand ist, die derart ausgelegt ist, dass sie an einen Längslenker (10) anodenbar und befestigbar ist.

5. Lenkerende (20) nach einem der vorhergehenden Ansprüche, umfassend eine Ventileinheit (60), welche vorzugsweise eine Klemmplatte (61) aufweist, und wobei die Ventileinheit, insbesondere die Klemmplatte (61), eine Vielzahl von Ventilöffnungen (62), insbesondere vier Ventilöffnungen (62), aufweist.

6. Lenkerende (20) nach Anspruch 5,
wobei die Ventileinheit (60) eine obere Ventilklappe (64') und eine untere Ventilklappe (64") umfasst, und
wobei die Ventilklappen (64', 64") derart angeordnet sind, dass jeweils unterschiedliche Ventilöffnungen (62) geöffnet und geschlossen werden können.

7. Lenkerende (20) nach Anspruch 5 oder 6,
wobei die Ventileinheit (60) ein Führungselement umfasst, welches derart ausgelegt ist, dass sich Ventilklappen (64', 64") entlang des Führungselements bewegen können.

8. Lenkerende (20) nach einem der Ansprüche 6 - 7, wobei die Ventilklappen (64', 64") in einer Grundstellung an der Klemmplatte (61) derart anliegen, dass die Ventilöffnungen (62) verschlossen sind.

9. Lenkerende (20) nach einem der Ansprüche 6 - 8, wobei die Ventileinheit (60) ein Federelement (61) umfasst, welches die Ventilklappen (64', 64") vorspannt.

10. Lenkerende (20) nach einem der Ansprüche 6 - 9 wobei die Ventilklappen (64', 64") jeweils zweiblättrig ausgebildet sind.

11. Längslenker (10), insbesondere für Nutzfahrzeuge,
umfassend ein Lenkerende (20) nach einem der vorhergehenden Ansprüche.

12. Längslenker (10) nach Anspruch 11, wobei der Längslenker (10) und das Lenkerende (20) einteilig ausgebildet sind.

## Claims

1. An arm end (20) for a trailing arm (10), in particular for commercial vehicles, comprising a main body (22) which configures a working volume (V) for an air spring system (80),
the main body (22) having an access region (24) which is designed to provide an access into the working volume (V),
wherein a large part of the working volume (V) is configured substantially below the access region (24),
the main body being a closed hollow body, **characterized in that** the hollow body being a component which is hydroformed.

2. The arm end (20) as claimed in claim 1,
the main body (22) having a lower section (26) opposite the access region (24), and
the lower section (26) being spaced apart from the access region (24) by more than 5 cm, preferably by more than 8 cm, in particular preferably by more than 10 cm.

3. The arm end (20) as claimed in claim 2,
the lower section (26) comprising a support face (28) which is designed for arranging the arm end (20) on a trailing arm (10).

4. The arm end (20) as claimed in one of the preceding claims,
the main body (22) having a front section which provides the function of a support or arranging face (28) which is preferably a substantially horizontal outer wall which is designed in such a way that it can be arranged on and fastened to a trailing arm (10).

5. The arm end (20) as claimed in one of the preceding claims, comprising a valve unit (60) which preferably has a clamping plate (61), and the valve unit, in particular the clamping plate (61), having a multiplicity of valve openings (62), in particular four valve openings (62).

6. The arm end (20) as claimed in claim 5,
the valve unit (60) comprising an upper valve flap (64') and a lower valve flap (64"), and
the valve flaps (64', 64") being arranged in such a way that in each case different valve openings (62) can be opened and closed.

7. The arm end (20) as claimed in claim 5 or 6,
the valve unit (60) comprising a guide element which is designed in such a way that valve flaps (64', 64") can move along the guide element.

8. The arm end (20) as claimed in one of claims 6 to 7,
the valve flaps (64', 64") bearing against the clamping plate (61) in a basic position in such a way that the valve openings (62) are closed.

9. The arm end (20) as claimed in one of claims 6 to 8,
the valve unit (60) comprising a spring element (61) which prestresses the valve flaps (64', 64").

10. The arm end (20) as claimed in one of claims 6 to 9,
the valve flaps (64', 64") in each case being configured with two blades.

11. A trailing arm (10), in particular for commercial vehicles,
comprising an arm end (20) as claimed in one of the preceding claims.

12. The trailing arm (10) as claimed in claim 11,
the trailing arm (10) and the arm end (20) being configured in one piece.

## Revendications

1. Extrémité (20) pour un bras de suspension longitudinal (10), en particulier pour des véhicules utilitaires,
comportant un corps de base (22) qui forme un volume de travail (V) pour un système à ressort pneumatique (80),
dans laquelle
le corps de base (22) présente une zone d'accès (24) qui est conçue pour assurer un accès au volume de travail (V),
une majeure partie du volume de travail (V) est réalisée sensiblement au-dessous de la zone d'accès (24),
le corps de base est un corps creux fermé,
**caractérisée en ce que**
le corps creux est un composant mis en forme par haute pression interne.

2. Extrémité (20) de bras de suspension selon la revendication 1,
dans laquelle
le corps de base (22) présente une portion (26) inférieure par rapport à la zone d'accès (24), et
la portion inférieure (26) est espacée de la zone d'accès (24) de plus de 5 cm, de préférence de plus de 8 cm, de manière particulièrement préférée de plus de 10 cm.

3. Extrémité (20) de bras de suspension selon la revendication 2,
dans laquelle
la portion inférieure (26) comprend une surface d'appui (28) qui est conçue pour agencer l'extrémité (20) sur un bras de suspension longitudinal (10).

4. Extrémité (20) de bras de suspension selon l'une des revendications précédentes,
dans laquelle
le corps de base (22) comprend une portion antérieure qui fait office d'une surface d'appui ou d'agencement (28) qui est de préférence une paroi extérieure sensiblement horizontale qui est conçue de manière à pouvoir être agencée ou fixée sur un bras de suspension longitudinal (10).

5. Extrémité (20) de bras de suspension selon l'une des revendications précédentes,
comprenant une unité formant vanne (60) qui comprend de préférence une plaque de serrage (61), l'unité formant vanne, en particulier la plaque de serrage (61), présentant une multitude d'ouvertures de vanne (62), en particulier quatre ouvertures de vanne (62).

6. Extrémité (20) de bras de suspension selon la revendication 5,
dans laquelle
l'unité formant vanne (60) comprend un clapet de vanne supérieur (64') et un clapet de vanne inférieur (64"), et
les clapets de vanne (64', 64") sont agencés de telle sorte que des ouvertures de vanne (62) respectives différentes peuvent être ouvertes et fermées.

7. Extrémité (20) de bras de suspension selon la revendication 5 ou 6, dans laquelle
l'unité formant vanne (60) comprend un élément de guidage qui est conçu de telle sorte que les clapets de vanne (64', 64") peuvent se déplacer le long de l'élément de guidage.

8. Extrémité (20) de bras de suspension selon l'une des revendications 6 à 7,
dans laquelle
les clapets de vanne (64', 64") s'appuient contre la plaque de serrage (61) dans une position de base, de telle sorte que les ouvertures de vanne (62) sont fermées.

9. Extrémité (20) de bras de suspension selon l'une des revendications 6 à 8,
dans laquelle
l'unité formant vanne (60) comprend un élément élastique (61) qui met sous précontrainte les clapets de vanne (64', 64").

10. Extrémité (20) de bras de suspension selon l'une des revendications 6 à 9,
dans laquelle
les clapets de vanne (64', 64") sont réalisés chacun avec deux ailettes.

11. Bras de suspension longitudinal (10), en particulier pour des véhicules utilitaires, comportant une extrémité (20) de bras de suspension selon l'une des revendications précédentes.

12. Bras de suspension longitudinal (10) selon la revendication 11,
dans lequel
le bras de suspension longitudinal (10) et l'extrémité (20) de bras de suspension sont réalisés d'un seul tenant.
